# EUROPÄISCHE PATENTANMELDUNG

(11) **EP 1 705 277 A1**
(43) Veröffentlichungstag der Anmeldung: **27.09.2006**
(21) Anmeldenummer: 05006181.1
(22) Anmeldetag: 22.03.2005
(51) Int. Cl.: D04H 13/00, B32B 5/26

(54) **Vlieslaminat**

(71) Anmelder: Colbond B.V., 6827 AV Arnhem (NL)
(72) Erfinder: Lucas, Leonardus, Johannes, 6921 WD Duiven (NL); Nieuwenhuizen, Marcellinus, Cornelis, Hendrikus, 6922 JM Duiven (NL)
(74) Vertreter: Oberlein, Gerriet H. R.

(57) **Zusammenfassung**

Es wird ein Laminat vorgeschlagen, umfassend eine oder mehrere Schichten von Vliesen aus Fasern oder Filamenten, wobei diese Schichten zumindest teilweise miteinander verbunden sind, welches sich dadurch auszeichnet, dass mindestens eine der Schichten eine UD-Schicht ist, die aus einem oder mehreren parallelen Bündel(n) von unidirektional ausgerichteten und untereinander verbundenen Fasern oder Filamenten besteht, und mindestens eine weitere Schicht im wesentlichen aus einem Wirrvlies besteht.

## Beschreibung

Die vorliegende Erfindung betrifft ein Laminat umfassend eine oder mehrere Schichten von Vliesen aus Fasern oder Filamenten, wobei diese Schichten zumindest teilweise miteinander verbunden sind.

Laminate sind an sich bekannt. Man versteht darunter Schichtstoffe, die durch das Verleimen flächiger Materialien, wie Holzfumiere, Papiere, Zellstoff, und Vliese aus organischen und anorganischen Fasern, Glasplatten und dergleichen mittels härtbarer oder auch thermoplastischer Kunststoffe bei niedrigem Pressdruck hergestellt sind. Als Bindemittel dienen vorzugsweise warmhärtende Kondensationsharze sowie Reaktionsharze, ferner mit Kunstharzen beschichtete Leimfilme oder auch reine Thermoplastfolien.

Derartige Laminate sind für eine Reihe von Anwendungen geeignet, insbesondere solche, bei denen es keine Vorzugsrichtung hinsichtlich mechanischer Beanspruchungen gibt. Liegen Beanspruchungen in bestimmten Richtungen vor, so werden in der Regel Gewebebahnen als eine der Laminatschichten eingesetzt.
Allerdings sind die Kosten bei der Gewebeherstellung, bedingt durch den Webprozess, in der Regel höher als die bloße Vliesherstellung.

Es besteht daher ein Bedürfnis, Laminate aus Vliesschichten zu erhalten, die beispielsweise hinsichtlich Belastbarkeit in bestimmten Vorzugsrichtungen beständiger sind als die bekannten Laminate und die zugleich preisgünstig und einfach in der Herstellung sind.

In der vorliegenden Erfindung wird vorgeschlagen, diese Anforderung dadurch zu lösen, dass das im Eingangsabsatz erwähnte Laminat mindestens eine UD-Schicht aufweist, die aus einem oder mehreren parallelen Bündel(n) von unidirektional ausgerichteten und untereinander verbundenen Fasern oder Filamenten besteht, und mindestens eine weitere Schicht aufweist, die im wesentlichen aus einem Wirrvlies besteht.

Im Rahmen der vorliegenden Erfindung soll unter Begriff "Vlies" ein textiles Flächengebilde verstanden werden, das durch die lose Aneinanderreihung und Aufeinanderschichtung geordneter oder ungeordneter Fasern bzw. Filamente entsteht und nur begrenzt durch sich selbst zusammen gehalten wird. Es kann aus Längs-, Längs- und Quer-, Querfasern (oder -filamenten) oder aus einer vollkommenen Wirrlage, letztere zur Unterscheidung als Wirrvlies bezeichnet, bestehen.
Es soll bei der vorliegenden Erfindung kein Unterschied gemacht werden zwischen (Stapel)-Fasern und (Endlos-)Filamenten, so dass - auch wenn nur einer der Begriffe genannt ist - stets der jeweils andere gleichermaßen gemeint ist.

Im Unterschied zu den Wirrvliesen soll die UD (Unidirektional)-Schicht ein Vlies enthalten, dass sich dadurch auszeichnet, dass deren Fasern oder Filamente in einer Richtung orientiert sind. Eine solche Schicht kann z.B. dadurch erhalten werden, dass die Filamente zunächst auf Bändern parallel zueinander gelegt und ausgerichtet, ggf. dabei auch gestreckt, werden und danach mit einem Adhesiv oder einem thermoplastischen Polymer, beispielsweise einem Schmelzkleber, überzogen (gecoated) werden. Nach dem Trocknen bzw. Erwärmen wird die so erhaltene UD-Schicht üblicherweise bis zum Einsatz auf Rollen gewickelt.

Diese UD-Schicht wird dann mit einem Wirrvlies in Verbindung gebracht, z.B. durch ein Legen der UD-Schicht auf das Wirrvlies, und dann durch erneutes Coaten mit entsprechenden Adhesiven oder Schmelzklebern miteinander verbunden.

Durch das Einbringen einer UD-Schicht wird das Laminat äußerst widerständig gegen mechanische Belastung in Richtungen parallel zu der UD-Richtung.

Selbstverständlich ist es möglich und des öfteren auch erwünscht, wenn das erfindungsgemäße Laminat noch mindestens eine zweite UD-Schicht aus einem oder mehreren parallelen Bündel(n) von unidirektional ausgerichteten und untereinander verbundenen Fasern oder Filamenten enthält, wobei diese zweite UD-Schicht eine Ausrichtung relativ zur Ausrichtung der ersten UD-Schicht in einem Winkel zwischen 0 und 90°, bevorzugt 90°, aufweist.
Weisen die beiden UD-Schichten zueinander einen Winkel von ca. 90° auf, so spricht man auch von einem "Crossply"-Laminat.

Für bestimmte Anwendungen kann es vorteilhaft sein, wenn das Wirrvlies als Sandwich zwischen zwei UD-Schichten, also beispielsweise zwischen der ersten und der zweiten UD-Schicht, angeordnet ist.

Im allgemeinen werden die Fasern oder Filamente in wenigstens einer der das Laminat bildenden Schichten aus thermoplastischen Polymeren bestehen, wobei es sich dabei um gleiche, wie z.B. lediglich solche aus Polyethylenterephthalat, oder verschiedene Polymere, wie z.B. einer Mischung aus Polyethylenterephthalat und Polybutylenterephthalat, handeln kann.

Liegen verschiedene thermoplastische Polymere vor, so sollten deren Schmelzpunkte um mindestens 10 °C, bevorzugt um mindestens 30 °C, noch bevorzugter um mindestens 50 °C, auseinander liegen und die Verbindung der Schichten sollte miteinander und/oder untereinander durch An- bzw.

Aufschmelzen und anschließendes Abkühlen des niedriger schmelzenden thermoplastischen Polymeren erfolgt sein.
Diese Laminate haben den Vorteil, dass zu ihrer Herstellung das aufwendigere Coaten vermieden bzw. minimiert wird. Wenn beispielsweise die UD-Schicht und/oder das Wirrvlies aus einer Mischung von Filamenten unterschiedlich hoch schmelzender thermoplastischer Polymere besteht, so genügt zu deren Verbindung ggf. einfaches Erwärmen. Der Anteil der niedriger schmelzenden Filamente braucht dazu nicht einmal sehr groß zu sein.

Eleganter - und daher bevorzugt - enthalten die Schichten des erfindungsgemäßen Laminat jedoch Fasern bzw. Filamente aus den jeweils gleichen thermoplastischen Polymeren, wobei deren Struktur aus zwei oder mehreren polymeren Komponenten mit um mindestens 10 °C, bevorzugt mindestens 30° und noch bevorzugter mindestens 50°C, unterschiedlichem Schmelzpunkt besteht und die Verbindung der Schichten miteinander und/oder untereinander durch An- bzw. Aufschmelzen und anschließendem Abkühlen der niedriger schmelzenden Komponente erfolgt ist.

Bevorzugt eingesetzt werden dabei thermoplastischen Polymere, die eine Bikomponentenstruktur aufweisen, insbesondere solche mit einer Kern-Mantel-Struktur, wobei die Mantelkomponente den niedrigeren Schmelzpunkt aufweist.

Es sind selbstverständlich auch Kombinationen aus unterschiedlich hoch schmelzenden thermoplastischen Polymeren und solchen mit der beschriebenen Bikomponentenstruktur möglich.

Die Lösung der erfindungsgemäßen Aufgabe gelingt besonders vorzüglich, wenn dafür gesorgt wird, dass alle das Laminat bildenden Schichten aus den gleichen Fasern oder Filamenten bestehen und sich demzufolge nur noch durch ihre jeweilige Orientierung, Vorlage also als Wirrvlies oder als UD-Schicht, unterscheiden.

Sorgt man weiterhin dafür, dass bei der Herstellung alle das Laminat bildenden Schichten eine Kem-Mantel-Bikomponentenstruktur aufweisen, so ist es mit einem einzigen Ausgangsmaterial möglich, gleichzeitig eine hervorragende Stabilität des erhaltenen Laminates zu erreichen und die Verbindung der einzelnen Schichten untereinander und/oder miteinander auf einfache Weise, und ohne zwischengeschaltete Coating-Schritte, zu erreichen.

An die Auswahl der die Kern-Mantel-Bikomponentenstruktur bildenden polymeren Komponenten brauchen keine besonderen Anforderungen gestellt zu werden.
Als besonders geeignet haben sich allerdings für die das Laminat bildenden Schichten solche Filamente erwiesen, die Bikomponentenstrukturen in Form einer Kern-Mantel-Struktur aufweisen, bei denen die Kemkomponente jeweils im wesentlichen aus Polyethylenterephthalat (PET) und die Mantelkomponente jeweils im wesentlichen aus Polyamid, insbesondere aus Polyamid 6, besteht.

Weitere gute Ergebnisse können erzielt werden, wenn neben PET als Kernkomponente ein Polyolefin, insbesondere Polypropylen, als Mantelkomponente eingesetzt wird.
Ebenfalls geeignet ist für die Bikomponentenstruktur eine Kem-Mantel-Struktur, bei der die Kemkomponente aus Polyethylenterephthalat und die Mantelkomponente aus einem Polybutylenterephthalat oder einem Polyetherester besteht. Als Polyetherester eignet sich in hervorragender Weise ein Copolymer aus Polybutylenterephthalat und Polytetrahydrofuran. Ein solcher Polyetherester hat einen Schmelzpunkt zwischen 190 und 200 °C.

Das Verhältnis von Kern- zu Mantelkomponente in den bevorzugt eingesetzten Bikomponentenstrukturen liegt zwischen 95/5 und 5/95 vol/vol, beispielsweise bei 70/30 vol/vol.

Die Titer der einzusetzenden Bikomponentenfilamente liegen bevorzugt zwischen 500 und 2000 dtex,
Die Vliesgewichte liegen zwischen 10 und 500 g/m².

## Patentansprüche

1. Laminat umfassend eine oder mehrere Schichten von Vliesen aus Fasern oder Filamenten, wobei diese Schichten zumindest teilweise miteinander verbunden sind, **dadurch gekennzeichnet, dass** mindestens eine der Schichten eine UD-Schicht ist, die aus einem oder mehreren parallelen Bündel(n) von unidirektional ausgerichteten und untereinander verbundenen Fasern oder Filamenten besteht, und mindestens eine weitere Schicht im wesentlichen aus einem Wirrvlies besteht.

2. Das Laminat gemäß Anspruch 1, wobei das Laminat mindestens eine zweite UD-Schicht aus einem oder mehreren parallelen Bündel(n) von unidirektional ausgerichteten und untereinander verbundenen Fasern oder Filamenten enthält, wobei diese zweite UD-Schicht eine Ausrichtung relativ zur Ausrichtung der ersten UD-Schicht in einem Winkel zwischen 0 und 90° aufweist.

3. Das Laminat gemäß Anspruch 2, wobei das Wirrvlies zwischen der ersten und der zweiten UD-Schicht angeordnet ist.

4. Das Laminat nach einem oder mehreren der Ansprüche 1 bis 3, wobei die Fasern oder Filamente in wenigstens einer der das Laminat bildenden Schichten aus gleichen oder verschiedenen thermoplastischen Polymeren bestehen.

5. Das Laminat nach Anspruch 4, wobei im Falle von verschiedenen thermoplastischen Polymeren deren Schmelzpunkte um mindestens 10 °C auseinander liegen und die Verbindung der Schichten miteinander und/oder untereinander durch An- bzw. Aufschmelzen und anschließendem Abkühlen des niedriger schmelzenden thermoplastischen Polymeren erfolgt ist.

6. Das Laminat nach Anspruch 4, wobei im Falle von gleichen thermoplastischen Polymeren, deren Struktur aus zwei oder mehreren polymeren Komponenten mit um mindestens 10 °C unterschiedlichem Schmelzpunkt besteht und die Verbindung der Schichten miteinander und/oder untereinander durch An- bzw. Aufschmelzen und anschließendem Abkühlen der niedriger schmelzenden Komponente erfolgt ist.

7. Das Laminat gemäß Anspruch 6, wobei die thermoplastischen Polymere eine Bikomponentenstruktur aufweisen.

8. Das Laminat gemäß Anspruch 7, wobei es sich bei der Bikomponentenstruktur um eine Kern-Mantel-Struktur handelt und die Mantelkomponente den niedrigeren Schmelzpunkt aufweist.

9. Das Laminat gemäß einem oder mehreren der Ansprüche 1 bis 8, wobei alle das Laminat bildenden Schichten aus den gleichen Fasern oder Filamenten bestehen.

10. Das Laminat nach Anspruch 9, wobei alle das Laminat bildenden Schichten aus Filamenten bestehen, die Bikomponentenstrukturen in Form einer Kern-Mantel-Struktur aufweisen, bei denen die Kemkomponente jeweils im wesentlichen aus Polyethylenterephthalat und die Mantelkomponente jeweils im wesentlichen aus Polyamid 6 besteht.
